# EUROPEAN PATENT APPLICATION

(11) **EP 4 847 641 A1**
(43) Date of publication of application: **02.12.2026**
(21) Application number: 24178320.8
(22) Date of filing: 27.05.2024
(51) Int. Cl.: C22B 3/00, C01G 51/04, C01G 53/04, C01G 53/10, C22B 47/00, C01G 51/10, C22B 3/44

(54) **SELECTIVE SEPARATION OF COBALT FROM NICKEL WHEN IN A FEEDSTOCK COMPRISING COBALT AND NICKEL**

(71) Applicant: Northvolt Revolt AB, 112 47 Stockholm (SE)
(72) Inventor: Anaya Garzon, Juan David, 723 58 Västerås (SE); Alemrajabi, Mahmood, 170 67 Solna (SE); Sadegh Vaziri, Ramiar, 120 78 Stockholm (SE); Ranitovic, Milisav, 723 46 Västerås (SE); Parra, Andrea María Burgos, 172 35 Sundbyberg (SE); Vieceli, Nathalia, 723 59 Västerås (SE); Fojt, Marta, 723 57 Västerås (SE)

(57) **Abstract**

The disclosure relates to a method for recovering cobalt and nickel from an aqueous stream comprising cobalt and nickel sulphate in solution. The method of the disclosure comprises a cobalt precipitation step wherein cobalt is precipitated in the form of cobalt oxide, followed by a nickel crystallisation and optional precipitation step.

## Description

### TECHNICAL FIELD

The disclosure relates to a method of selectively recovering cobalt and nickel and effective separation of these metals from one another when they are in an aqueous feedstock comprising cobalt and nickel. The method comprises a first precipitation step wherein cobalt is recovered and a second crystallisation step wherein nickel is crystallised.

### BACKGROUND

With the increasing demand for Lithium-Ion Batteries (LIBs), there is a corresponding rise in the need for the chemicals used in their production, particularly battery-grade metals such as Nickel (Ni) and Cobalt (Co). In LIBs manufacturing and recycling processes, these metals are primarily used in the form of sulphate salts, such as in the production of Precursor Cathode Active Material (pCAM).

When obtained from primary sources, nickel and cobalt are typically firstly recovered from the ores and concentrates in form of pure metals through a series of pyroelectrometallurgical refining operations. These metals are then used to produce nickel and cobalt sulphate salts by dissolving in sulphuric acid. A similar concept is followed when producing nickel and cobalt sulphate salts from the secondary sources; black mass (mixture of the anode and cathode active material obtained after mechanical processing), is leached by sulphuric acid converting the nickel and cobalt from their respective oxides into the sulphate solution. Both processes suffer from low purity of the recovered materials.

For example, during the leaching process, other metals are transferred into the pregnant leaching solution (PLS) as well as the nickel and cobalt. Typical impurities introduced into the system include manganese (Mn), magnesium (Mg) and iron (Fe), and other minor metals such as aluminium (Al), calcium (Ca), zinc (Zn), and copper (Cu). To ensure the purity of the final nickel and cobalt sulphate salts, the leaching process is followed by a series of purification steps before crystallisation into battery-grade sulphates. The purification step typically comprises specific pH levels to selectively remove impurities and precipitate Ni and Co metal salts.

In addition, due to the fact that physical chemistry of nickel and cobalt is similar, separation of these two valuable materials from each other is also challenging. For instance, both cobalt and nickel precipitate in the same basic pH range, meaning that traditional pH precipitation alone is typically not suitable.

Accordingly, there is a need for a process separating cobalt and nickel from each other from an aqueous solution comprising cobalt and nickel sulphate in solution.

### SUMMARY

The object of the present disclosure is to provide a method for recovering metal materials from an aqueous solution, in particular for selectively recovering cobalt and nickel from an aqueous solution comprising cobalt and nickel sulphate in solution. The method of the disclosure is resource-efficient, environmentally-friendly, provides a high recovery rate of cobalt with a low recovery rate of nickel in the cobalt precipitation step. This allows for a subsequent nickel crystallisation step that produces a very low level of cobalt crystals. The method of the disclosure therefore provides an effective methodology for separating and recovering cobalt and nickel when present together in an aqueous solution.

In a first aspect, the disclosure provides a method of recovering cobalt and nickel from an aqueous solution, the aqueous solution comprising cobalt and nickel sulphate in solution, the method comprising:
- A cobalt precipitation step comprising adding an oxidising reagent to the aqueous solution to form a cobalt oxide precipitate and a first supernatant, wherein the pH of the aqueous solution is maintained at a pH of from 2 to 5 during the cobalt precipitation step;
- Separating the cobalt oxide precipitate and the first supernatant;
- A nickel crystallisation step comprising recovering crystalline nickel sulphate from the first supernatant and forming a second supernatant; and
- Optionally a nickel precipitation step comprising adding a basifying agent to the second supernatant to form a nickel oxy precipitate.

While the disclosure is amenable to various modifications and alternative forms, specifics thereof have been shown by way of example and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description.

### BRIEF DESCRIPTION OF THE DRAWINGS

Figure 1 shows a flow diagram of steps of the method of the disclosure.
Figure 2 shows a phase diagram of the oxidation-reduction potential of 1 molar Ni, Co and Mn oxides and hydroxides as a function of pH.
Figure 3 shoes a phase diagram of the oxidation-reduction potential of 1 molar Co as a functional of pH.
Figure 4A and 4B shows the results of parameter testing for the cobalt precipitation step using sodium persulphate as the oxidising agent in a molar ratio of 0.46:1 sodium persulphate:cobalt.
Figure 5A and 5B shows the results of parameter testing for the cobalt precipitation step using sodium persulphate as the oxidising reagent in a molar ratio of0.77:1 sodium persulphate:cobalt.
Figure 6A and 6B shows the results of parameter testing for the cobalt precipitation step using ozone as the oxidising agent for an aqueous solution of cobalt and nickel sulphate in solution.
Figure 7A and 7B shows the results of parameter testing for the cobalt precipitation step using ozone as the oxidising reagent for an aqueous solution of cobalt, nickel and manganese sulphate in solution.

### DETAILED DESCRIPTION

The disclosure relates to a method of recovering cobalt and nickel from an aqueous solution comprising nickel and cobalt sulphate in solution. The purpose of the method is to separate cobalt and nickel from an aqueous solution comprising both metals. In some embodiments, an additional advantage is that the cobalt and/or nickel recovered has high purity with a low wt% of other transition metals, however the main purpose of the method is to provide efficient separation of cobalt and nickel from each other.

In particular, the method of the disclosure provides a high cobalt recovery rate and a low nickel recovery rate in the cobalt precipitation step meaning that the cobalt oxide precipitate is substantially free from nickel, and the crystalline nickel is substantially free from cobalt.

### Aqueous solution

The method of the disclosure comprises recovering Co from an aqueous solution. The aqueous solution of the disclosure is the input stream for the cobalt precipitation step. That is, the aqueous solution is the medium from which cobalt is recovered in the cobalt precipitation step. The aqueous solution may also be referred to herein as the input stream.

In the context of the disclosure, an aqueous solution is a composition comprising nickel sulphate (NiSO₄) and cobalt sulphate (CoSO₄) wherein the cobalt and nickel sulphates are in solution. That is, the nickel and cobalt are dissolved in the aqueous solution such that the transition metal ions and the sulphate ions are dissociated.

To form the feedstock, a composition comprising nickel and cobalt may be leached in sulphuric acid. The composition comprising nickel and cobalt may be a primary source (e.g. a lateritic ore) or secondary source (a cathode, black mass or mixed hydroxide precipitates).

Accordingly, the aqueous solution of the disclosure is typically acidic and has a low pH.

Preferably the composition comprising nickel and cobalt is a secondary source. In such embodiments, the aqueous solution will typically comprise any other transition metals present in the secondary source such as manganese, copper and iron.

The aqueous solution of the disclosure may additionally comprise manganese. If a precipitate comprising only cobalt oxide is desired (from amongst the transition metal precipitates), the amount of manganese is preferably low. In the context of the disclosure, a "low amount of manganese" does not refer to an absolute measure of manganese but rather the ratio between manganese and cobalt/nickel.

In an embodiment, the aqueous solution of the disclosure comprises a molar ratio of Co:Mn of at least 3:1, at least 4:1, for instance at least 6:1, at least 8:1, at least 9:1, at least 10:1 or at least 20:1. Preferably the molar ratio of Co:Mn is from 5:1 to 9:1.

In an embodiment, the aqueous solution comprises a molar ratio of Ni:Mn of at least 5:1, for instance at least 50:1, at least 100:1, at least 200:1, at least 500: 1 or at least 1000: 1.

Manganese will typically precipitate together with the cobalt oxide, leading to a mixture of cobalt and manganese oxides. Manganese in the solution will not affect the selectivity of the cobalt precipitation step for cobalt over nickel and therefore will not influence the cobalt and nickel separation efficiency.

In embodiments wherein the aqueous solution is derived from a composition comprising nickel, cobalt and manganese, pre-separation steps may be performed before or after leaching in order to remove excess manganese and form the aqueous solution used as the input stream for the cobalt precipitation step. In such embodiments, the initial aqueous starting solution comprising cobalt, nickel and manganese sulphate is treated to remove excess manganese and form the aqueous solution comprising cobalt and nickel sulphate used as the input stream for the cobalt precipitation step.

The manganese precipitation step may be referred to as a pre-precipitation step, and is performed on the aqueous starting solution.

For instance, in an embodiment, the method comprises a pre-precipitation step wherein manganese is selectively precipitated over cobalt and nickel. That is, before carrying out the cobalt precipitation step in which cobalt is recovered from the aqueous solution, any manganese present may be precipitately removed from the aqueous starting composition.

In an embodiment, is provided a method of recovering cobalt and nickel from an aqueous solution, the aqueous solution comprising cobalt, manganese and nickel sulphate in solution, the method comprising:
- Providing an aqueous starting solution comprising manganese, nickel and cobalt sulphate in solution;
- A manganese precipitation step comprising selectively precipitating manganese over nickel and cobalt from the aqueous starting solution to form a manganese precipitate and an aqueous solution comprising cobalt and nickel sulphate in solution;
- Removing the manganese precipitate from the aqueous solution;
- A cobalt precipitation step comprising adding an oxidising reagent to the aqueous solution to form a cobalt oxide precipitate and a first supernatant, wherein the pH of the aqueous solution is maintained at a pH of from 2 to 5 during the cobalt precipitation step;
- Separating the cobalt oxide precipitate and the first supernatant;
- A nickel crystallisation step comprising recovering crystalline nickel sulphate from the first supernatant and forming a second supernatant; and
- Optionally a nickel precipitation step comprising adding a basifying agent to the second supernatant to form a nickel oxy precipitate.

Any suitable method of selective manganese precipitation may be used. For instance, oxidative precipitation, ion exchange or other suitable method.

As an alternative, or in addition to, using manganese precipitation, the method may comprise precipitation of manganese and cobalt during the cobalt precipitation step, followed by the nickel crystallisation and optional nickel precipitation steps. The product obtained from the cobalt precipitation step may then optionally be processed further to separate the cobalt and manganese from one another.

In an embodiment, the composition from which the aqueous solution is derived is a lithium intercalation material comprising Ni, Co and Mn, also known as an 'NMC' material.

Preferably, the aqueous solution is comprising nickel and cobalt sulphate in solution is obtained from a process for recycling a cathode active material.

The method of the disclosure provides selective recovery of cobalt over nickel in the aqueous solution, followed by crystallisation and optional precipitation of the nickel so as to provide effective separation of cobalt from nickel. In the context of the disclosure, "selectivity" refers to a process in which one transition metal is precipitated whilst another remains in solution.

Accordingly, in the context of the disclosure, a selective process does not refer to a process in which all of the desired transition metal is precipitated (i.e. all of the cobalt), and neither does it refer to a process in which none of an undesired transition metal is precipitated (i.e. nickel), although these two scenarios are encompassed.

For instance, in the context of the disclosure, a method selective for cobalt refers to a method in which a higher proportion of cobalt from the aqueous solution is precipitated compared to the proportion of nickel.

In another example, a method selective for manganese refers to a method in which a higher proportion of manganese from the aqueous starting solution is precipitation compared to the proportion of cobalt or nickel.

When the composition comprising nickel and cobalt is a secondary source, the aqueous solution may also comprise other non-transition metals often used in battery manufacturing such as lithium, sodium, magnesium, calcium, and/or aluminium.

When the secondary source is derived from a cathode or black mass source, lithium, sodium, magnesium, calcium and/or aluminium are likely to be present. In the context of the disclosure, these elements are referred to as "impurities".

Accordingly, when it is stated that a 'high purity' cobalt is recovered in the process, it means that the cobalt oxide precipitates comprise a low or trace amount of lithium, sodium, magnesium, calcium, aluminium or mixtures thereof.

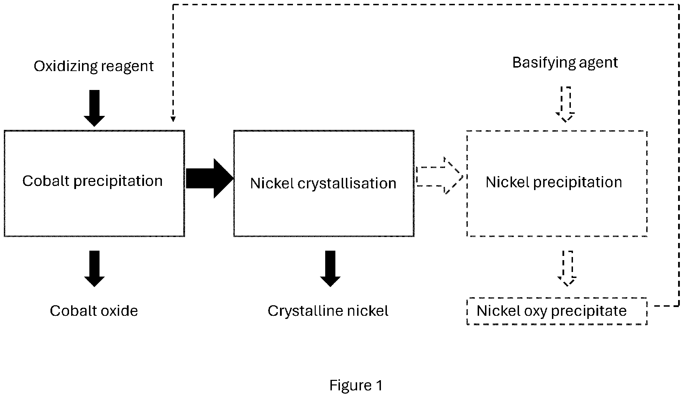

The method of the disclosure comprises treating the aqueous solution in a series of steps, the steps comprising a cobalt precipitation step, a nickel crystallisation step and an optional nickel precipitation step. A flow diagram of the method of the disclosure is depicted in Figure 1, wherein optional steps are shown with dashed lines.

The process begins by adding an oxidising reagent to the aqueous solution in the cobalt precipitation step in order to precipitate cobalt oxide and form a first supernatant. Nickel is then recovered from the first supernatant in the form of nickel crystals, leaving a second supernatant.

An optional third step is then carried out wherein any remaining nickel in the second supernatant is recovered via a nickel precipitation step. The nickel precipitation step comprises adding a basifying agent to the second supernatant to recover a nickel oxy precipitate. In some embodiments, the nickel oxy precipitate may be recycled and used as a neutralizing agent in a subsequent cobalt precipitation step.

### Cobalt precipitation step

The method of the disclosure comprises a cobalt precipitation step wherein cobalt is recovered from the aqueous solution in the form of cobalt oxide. The cobalt precipitation step is therefore an oxidative precipitation step.

Oxidising agents according to the disclosure are those that oxidise cobalt to cobalt oxide at the pH of the aqueous solution. That is, the oxidation-reduction potential of the oxidising agent is preferably higher than cobalt at the reaction conditions in order to oxidise cobalt and reduce the oxidising agent.

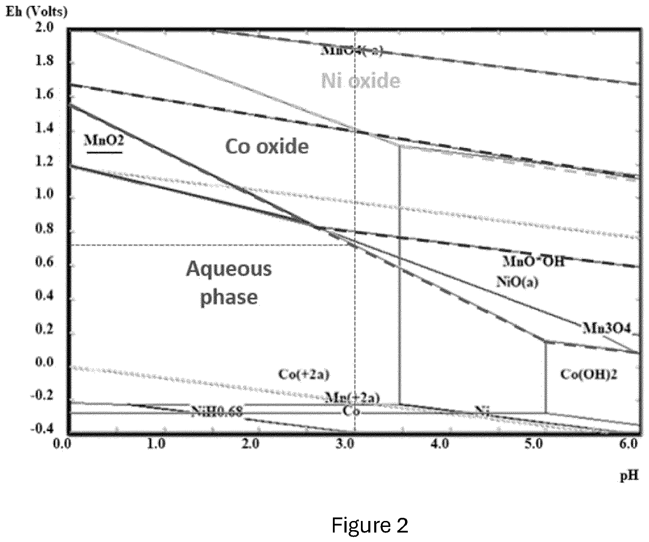

Figure 2 provides guidance for how to select suitable oxidising agents at a given pH using example systems at a temperature of 80°C. Figure 2 shows an overlay of the results for Ni, Co and Mn systems at 1 molar concentration.

The dotted line on Figure 2 leading vertically upwards from the x-axis at pH 3 intersects with the plot line for cobalt oxide at an Eh of around 700mV vs SHE. Accordingly, at pH 3, the oxidising agent must have an oxidation-reduction potential of more than 700mV vs SHE in order to precipitate cobalt as cobalt oxide.

In an embodiment, the oxidising agent has an oxidation-reduction potential of 700mV vs SHE or above at pH 3.

Figure 2 also shows that the oxidation-reduction potential of nickel is at around 1400mV vs SHE at pH 3. Accordingly, an ORP of above 1400mV will cause oxidation of nickel and cobalt at pH 3.

In an embodiment, the aqueous solution has an oxidation-reduction potential of 1400mV or less at pH 3.

In an embodiment, the aqueous solution has an oxidation-reduction potential of from 700mV to 1400mV at pH 3.

In an embodiment, the aqueous solution has an oxidation-reduction potential of higher than cobalt oxide and lower than nickel oxide at the pH of aqueous solution during the cobalt precipitation step.

Any suitable oxidising reagent may be used. That is, any oxidising reagent having an oxidation-reduction potential above cobalt oxide at the pH of the cobalt precipitation step may be used.

Often oxidising agents comprising a peroxide moiety have appropriate oxidation-reduction potentials and as such are particularly suitable for use in the cobalt precipitation step. Oxidising agents comprising peroxide moieties typically cause oxidation via the formation of a highly reactive peroxide radical.

Exemplary oxidising reagents comprise persulphates, for instance persulphate acids or persulphate salts. A persulphate (sometimes known as peroxysulphate or peroxodisulphate) is a compound containing the anions SO₅²⁻ or S₂O₈²⁻. The anion SO₅²⁻ contains one peroxide group per sulphur centre, whereas in S₂O₈²⁻, the peroxide group bridges the sulphur atoms.

The persulphate may be in the acid form, such as H₂SO₅ or H₂S₂O₈, or it may be in the form of a salt such as a lithium, potassium or sodium salt. Examples of suitable persulphate salts include Na₂SO₅, Na₂S₂O₈, KHSOs and K₂S₂O₈.

Further exemplary oxidising reagents include ozone (O₃, or O₂/O₃) and SO₂/O₂.

When a gaseous oxidising reagent is used, the reagent may be bubbled through the aqueous solution, or the cobalt precipitation step may be carried out in a sealed vessel.

The oxidising reagent may be a single compound or it may be a mixture of oxidising reagents.

A particularly preferred oxidising reagent is ozone as it leads to a high recovery rate cobalt in the form of cobalt oxide precipitate and a very low recovery rate of nickel.

The amount of oxidising reagent added in the cobalt precipitation step will depend on the desired recovery rate and the amount of cobalt present in the aqueous solution.

Preferably the ratio of oxidising reagent added to the aqueous solution is the minimum amount required to recover the desired amount of cobalt. An excess oxidising reagent added in the cobalt precipitation step may lead to a high wt% of impurities in the nickel crystals recovered downstream, particularly when the oxidising reagent comprises elements that are considered impurities within the context of the disclosure.

For instance, when the oxidising reagent is sodium persulphate, adding an excess amount may lead to a higher wt% sodium in the cobalt oxide precipitate, or it may lead to a higher wt% sodium in the nickel crystals and/or precipitate formed downstream.

The desired amount of cobalt removed from the aqueous solution will depend on the relative composition of the aqueous solution input stream and the end use of the recovered materials.

For instance, in some embodiments, the end product of the recovered materials is for use in a cathode active material comprising both cobalt and nickel. If the aqueous stream comprises a higher cobalt:nickel mole ratio than in the desired end product, the cobalt precipitation step can therefore be used to obtain a lower cobalt:nickel mole ratio in the first supernatant.

This then allows for both cobalt and nickel to be recovered as sulphate salts in the nickel crystallisation step, preferably wherein the crystals have the desired cobalt: nickel mole ratio.

The desired cobalt/nickel mole ratio in the first supernatant may be slightly higher or lower than the desired cobalt/nickel ratio in the end product due to the nickel crystallisation step potentially resulting in a different crystallisation rate for cobalt and nickel.

Accordingly, in some embodiments therefore, the cobalt precipitation step comprises purposely only separating a fraction of the cobalt from the aqueous solution.

In other embodiments, the cobalt precipitation step comprises separating the maximum amount of cobalt from the aqueous solution (i.e. a target 100% recovery rate).

In some embodiments, a stoichiometric amount of oxidising reagent is added with respect to cobalt.

For instance, when the oxidising reagent is sodium persulphate, and the desired recovery rate is 100%, a stoichiometric amount of sodium persulphate (0.5:1 mol ratio)with respect to the amount of cobalt comprised in input stream of aqueous solution may be used.

Typically, a slightly greater than stoichiometric amount of oxidising reagent to cobalt comprised in input stream of aqueous solution is required in order to recover 100% cobalt, because other components of the aqueous solution (nickel, other transition metals, impurities) may also consume some of the oxidising agent. The amount of additional oxidising reagent required will typically depend on the pH of the aqueous solution during the cobalt precipitation step.

In some embodiments, for instance when manganese is present in the aqueous solution, a greater than stoichiometric amount (i.e. greater than 1:1 mole ratio) of oxidising reagent will be required to recover the desired amount of cobalt as some will be consumed by oxidation and precipitation of the manganese.

In an embodiment, the oxidising reagent is added in a molar ratio of 0.1:1 of oxidising reagent to the amount of cobalt comprised in input stream of aqueous solution, for instance the oxidising reagent is added in a molar ratio of 0.25:1, 0.5:1, 1:1, 1.25:1, 1.5:1, 2:1, 2.5:1 or 3:1 of oxidising reagent to the amount of cobalt comprised in input stream of aqueous solution.

The oxidising agent may be added at once, or it may be added step wise. For instance, a portion of the oxidising agent may be added to form a first batch of cobalt oxide precipitates, and then a second portion of oxidising agent may be added to form a second batch of cobalt oxide precipitates.

The first batch of cobalt oxide precipitates may be removed from the aqueous solution before the second portion of oxidising agent is added.

In an embodiment, the cobalt precipitation step results in the recovery of at least 10wt% of the total amount of cobalt in the aqueous solution comprising cobalt and nickel sulphate used as the input stream for the cobalt precipitation step, such as at least 20wt%, at least 30wt%, at least 40wt%, at least 50wt% at least 60wt%, at least 70wt%, at least 80wt% or at least 90wt% of the total amount of cobalt in the aqueous solution comprising cobalt and nickel sulphate used as the input stream for the cobalt precipitation step.

Viewed differently, the cobalt precipitation step may result in no more than 90wt% of the cobalt from the aqueous solution used as the input stream remaining in the first supernatant, such as no more than 80wt%, no more than 70wt%, no more than 60wt%, no more than 50wt%, no more than 40 wt% no more than 30 wt%,no more than 20 wt%, preferably no more than 10 wt% of the cobalt from the aqueous solution comprising cobalt and nickel sulphate used as the input stream remaining in the first supernatant.

This is in addition to the cobalt precipitation step preferably resulting in the recovery of 10wt% or less, such as 8wt% or less, 6wt% or less, 4wt% or less 2wt% or less of the nickel in the aqueous solution comprising cobalt and nickel sulphate used as the input stream for the cobalt precipitation step.

The amount of cobalt recovered in the precipitation step can be tuned in order to provide the desired ratio of nickel:cobalt mole ratio in the first supernatant. The cobalt recovery rate may be influenced by the amount of oxidising reagent, the temperature, the pH or the duration of the cobalt precipitation step.

The cobalt precipitation step results a nickel-enriched supernatant. That is, the relative amount of supernatant is greater in the first supernatant that it is in the input stream of aqueous solution.

That is, in an embodiment, the Ni:Co molar ratio in the input stream of aqueous solution is lower than that Ni:Co molar ratio in the first supernatant. This is due to the selective precipitation of cobalt oxide over nickel in the cobalt precipitation step.

In an embodiment, the cobalt precipitation step results in a nickel enrichment factor of the aqueous solution compared to the first supernatant of at least 2, for instance at least 2.5, at least 3, at least 3.5, at least 4, at least 4.5 or preferably at least 5. That is, if the aqueous solution comprises 1:1 mole ratio Ni:Co, the first supernatant comprises 2:1, 2-5:1, 3:1, 3.5:1, 4:1, 4.5:1 or 5:1 mole ratio of Ni:Co.

The pH of the aqueous solution is maintained at a pH of from 2 to 5 during the cobalt precipitation step.

In an embodiment, the pH of the aqueous solution is maintained at a pH of from 2 to 4.8, for instance from 2 to 4.5, from 2 to 4.2, from 2 to 4, from 2.2 to 3.8, from 2.5 to 3.5 or from 2.8 to 3.2. Preferably, the pH of the aqueous solution is maintained at a pH of about 3 during the cobalt precipitation step.

As shown in Figure 2, at higher pH, the oxidation-reduction potential of cobalt oxide is lower. This means that more cobalt oxide will precipitate more easily at the higher end of the pH range. A high pH is therefore suitable when up to 100% recovery of cobalt is desired in the cobalt oxide precipitation step.

As can be seen from Figure 2, when the pH is close to the neutral end of the acidic side of the pH scale, e.g. a pH of above about 5, the ORP of nickel oxide is similar to that of cobalt. This means that nickel will precipitate together with the cobalt resulting in a mixed oxide precipitate. This means that the cobalt precipitation steps carried out at a pH of above about 5 are poor at separating cobalt and nickel from each other.

In addition, cobalt precipitation step carried out at a pH of above 5 may also result in a higher wt% impurities in the cobalt oxide precipitate. For instance, sodium precipitation is also favoured at the higher end of the acidic pH range. Accordingly, a pH in the lower end of the range also results in the recovery of a more pure cobalt oxide precipitate.

In order to maintain selectivity for cobalt over nickel, the cobalt precipitation step is preferably below 5, below 4, such as below 3.8, or below 3.5.

The trend for cobalt selectivity over nickel continues as the pH decreases, however, a very acidic pH is also unfavourable. At a pH of, for example, 2 or below, the formation of soluble oxidised Co (Co³⁺) is significant.

If the pH of the cobalt precipitation step is too low e.g. it is decreased below 2, the aggressive conditions lead to excellent solubility of cobalt in the aqueous solution and precipitation in the form of a cobalt oxide does not occur. This leads to a poor yield of cobalt oxide precipitate making the process inefficient and increases costs.

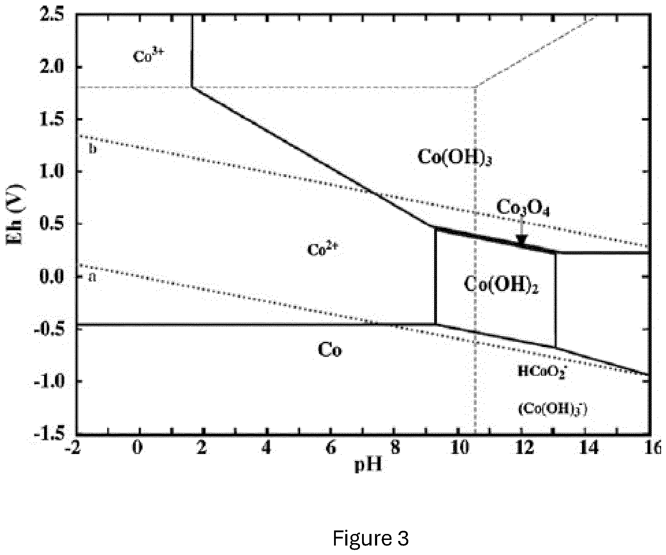

This is depicted in Figure 3 wherein a phase diagram of the solubility of cobalt in its different oxidation states is shown as a function of pH. As can be seen, Co³⁺ is soluble in the aqueous phase as a pH of below 2, whereas it is stable in the solid form at a pH of 2 and above.

Accordingly, in embodiments wherein cobalt recovery is prioritized and a small amount of nickel and/or impurities in the cobalt oxide precipitate can be tolerated, a pH at the higher end of the range may be most suitable.

However, in embodiments wherein cobalt and nickel separation (i.e. little to no nickel can in the cobalt oxide precipitate can be tolerated), wherein the cobalt oxide purity is prioritized (i.e. little to no impurities in the cobalt oxide precipitate can be pr, a pH at the lower end of the range may be most suitable.

An example of the reaction between the oxidising agent and cobalt is provided below, wherein the oxidising agent is sodium persulphate for illustrative purposes.

2CoSO₄ + Na₂S₂O₈ + 4H₂O → Na₂SO₄ + 2CoOOH₍ₛ₎ + 3H₂SO₄

As shown above, as the cobalt precipitation step progresses, sulphuric acid is produced. This means that the aqueous solution acidifies over the course of the cobalt precipitation step.

It is therefore critical that the pH of the cobalt precipitation step is actively maintained within the desired range for its duration.

Accordingly, in some embodiments, a neutralizing agent is added in order to maintain the pH within the desired range.

In an embodiment, the cobalt precipitation step comprises adding a neutralizing agent to the aqueous solution to maintain the pH within the desired range.

Any suitable neutralizing agent may be used. Preferred neutralizing agents comprise those comprising components already present in the aqueous solution.

For instance, examples of suitable neutralizing agents are alkali metal or alkaline earth metal hydroxide or oxides, for instance LiOH, NaOH, Ca(OH)₂, or MgO. Other suitable neutralizing agents comprise transition metal hydroxides such as Co(OH)₂, Mn(OH)₂ or Ni(OH)₂.

In some embodiments, the neutralizing agent of the cobalt precipitation step is the product of an upstream, downstream or parallel step wherein a metal oxide is precipitated. For instance, the neutralizing agent may be a Co(OH)₂, Mn(OH)₂ or Ni(OH)₂ precipitate formed in a battery recycling process.

In an embodiment, the neutralizing agent of the cobalt precipitation step is the nickel precipitate formed in the nickel precipitation step.

Not only does recycling the nickel precipitate formed downstream improve process efficiency, circularity and minimize environmental impact, it also ensures that no additional impurities are added to the system. By keeping impurities to a minimum, a higher purity product can be recovered, and additional purification steps can be avoided.

The neutralizing agent may be in the form of a solid, a slurry or a liquid. For example, the cobalt precipitation step may be carried out by diluting the aqueous solution and then adding solid neutralizing agent, or conversely the cobalt precipitation may be carried out by simultaneously adding an aqueous neutralizing agent.

In an embodiment, the cobalt precipitation step is carried out at elevated temperature. In the context of the disclosure, an elevated temperature is a temperature of 50°C or more, such as 60°C or more, or 70°C or more. For instance, the cobalt precipitation step may be carried out at a temperature of from 50 to 90°C, such as from 55 to 85°C, from 60 to 80°C or from 70 to 80°C.

An elevated temperature improves the oxidation reaction kinetics and leads to more efficient cobalt oxidation. This is particularly true when the oxidising reagent comprises a peroxide moiety, for example a persulphate. Elevated temperatures activate the formation of the peroxide radical leading to a faster, more effective reaction.

When using ozone as the oxidising agent, the temperature of the cobalt precipitation step is typically lower as its solubility is lower at higher temperatures. For instance, the cobalt precipitation may be carried out at 60°C or below, for example 50°C or below, such as from 10°C to 50°C, or from 15°C to 45°C.

Accordingly, in an embodiment, the method comprises a cobalt precipitation step comprising:
adding an oxidising agent to the aqueous solution, wherein the oxidising reagent comprises a peroxide moiety,
wherein the pH of the aqueous solution is maintained at a pH of from 2 to 5,
wherein the cobalt precipitation step is carried out at a temperature of above 50°C.

The result of the cobalt precipitation step is a cobalt oxide precipitate and a first supernatant.

In some embodiments, the cobalt oxide precipitate is crystalline.

The cobalt oxide precipitate will comprises oxides and hydroxides of cobalt such as CoO, Co₂O₃, Co₃O₄, Co(OH)₂, CoHOz, and mixtures thereof. The cobalt oxide precipitate may also comprise a small amount of nickel precipitates, and when present, will typically comprise manganese precipitates. The cobalt oxide precipitate may also comprise an amount of precipitate deriving from impurities present in the aqueous solution.

Preferably, the maximum amount of nickel, manganese when present, and impurities are retained in the first supernatant after the cobalt precipitation step such that the cobalt oxide precipitate is of high purity.

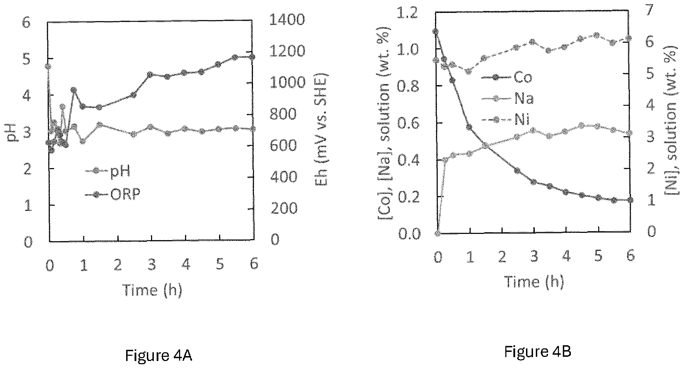

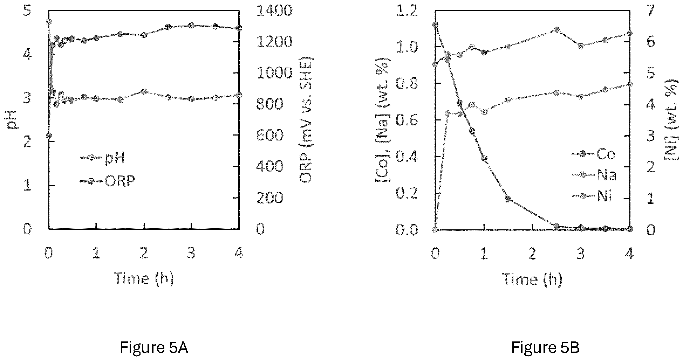

Figures 4B and 5B demonstrates that the method of the disclosure leads to a high purity cobalt oxide precipitate comprising a low wt% of impurities.

Following the cobalt precipitation step, the cobalt oxide precipitate is separated from the first supernatant before downstream processed of the first supernatant to recover nickel.

The cobalt oxide precipitate may be separated from the first supernatant via any suitable method. For instance, the cobalt oxide precipitated may be separated from the first supernatant by filtration.

The cobalt oxide precipitates may be further processed in order to form a material suitable for manufacturing a battery. For example, the cobalt oxide precipitates may be converted to sulphate salts in order to produce a cathode precursor cobalt material.

Due to the selectivity for cobalt precipitation in the cobalt precipitation step, the first supernatant is Ni-rich compared to the aqueous solution. The first supernatant is also preferably rich in impurities compared to the aqueous solution.

### Nickel crystallisation

The method of the disclosure comprises a nickel crystallisation step wherein nickel in the first supernatant is crystallised. In the crystallisation step, nickel is crystallised in the form of nickel sulphate.

Due to the selectivity of the cobalt precipitation step for cobalt over nickel, the crystals formed in the nickel crystallisation step have a very low level of cobalt sulphate. Accordingly, the method of the disclosure provides excellent recovery of nickel from the aqueous solution comprising cobalt and nickel sulphate in solution.

Any suitable crystallisation conditions may be used. For instance, crystallisation may be promoted by concentrating the first supernatant. For example, the nickel crystallisation step may comprise evaporating part or all of the water from the first supernatant in order to concentrate the metals salts and force crystallisation of nickel. Preferably, the crystallisation step is carried out by saturating the nickel sulphate salts in the first supernatant.

Any suitable means may be employed for speeding up the evaporation of water from the first supernatant.

The evaporation may comprise heating the first supernatant. For instance, the crystallisation step may comprise heating the first supernatant to a temperature of at least 30°C, at least 40°C, at least 50°C, at least 60°C or above, at least 70°C, at least 80°C or at least 90°C.

The evaporation may comprise increasing the pressure of the vessel holding the first supernatant in order to achieve evaporation at a lower temperature.

Other ways in which evaporation may be facilitated comprise removal of water by vacuum extraction, agitation or rotation of the first supernatant.

The nickel crystals formed in the nickel crystallisation step are in the form of a sulphate salt. The nickel crystallisation step may also result in the formation of other crystal salts, for instance manganese sulphate, sodium sulphate or lithium sulphate and cobalt sulphate deriving from any cobalt that is not separated in the cobalt precipitation step. The composition of the solid crystals obtained in the nickel crystallisation step will be dependent on the composition of the first supernatant and on the efficiency of the cobalt precipitation step.

Due to the efficiency of the cobalt precipitation step, the nickel crystals formed in the nickel crystallisation step typically have an extremely low wt% of cobalt (unless of course precipitation of only part of the cobalt was intentionally carried out, so as to adjust the cobalt:nickel ratio to suit a desired end use). The method of the disclosure therefore provides excellent nickel recovery from the aqueous solution comprising cobalt and nickel sulphate.

The nickel crystallisation step results in the formation of nickel sulphate crystals and a second supernatant.

The second supernatant may comprise a higher or lower wt% nickel as compared to the first supernatant, depending on the amount of water removed in the nickel crystallisation step.

However, the weight ratio of nickel to other remaining metals or impurities is preferably lower in the second supernatant than in the first supernatant. That is, preferably the nickel crystallisation step is selective for nickel and optionally other transition metals over impurities.

In an embodiment, the nickel crystallisation step comprises recovery of at least 10wt% of the nickel from the first supernatant in the form of nickel sulphate, for instance recovery of at least 20wt%, at least 30wt%, at least 40wt%, at least 50wt% at least 60wt%, at least 70wt%, at least 80wt% or at least 90wt% of the nickel from the first supernatant in the form of nickel sulphate.

### Nickel precipitation step

The method of the disclosure optionally comprises a nickel precipitation step wherein nickel is recovered from the second supernatant in the form of an "oxy" precipitate (i.e. a nickel oxy precipitate). In the context of the disclosure a nickel oxy precipitate encompasses oxides, hydroxides and oxyhydroxides.

That is, the nickel oxy precipitates may comprise nickel hydroxide (Ni(OH)₂), nickel oxyhydroxide (NiOOH) and nickel oxide.

In some embodiments, the nickel oxy precipitate is crystalline.

Typically, the nickel will first precipitate in the hydroxide form, however it may oxidize to the oxyhydroxide or oxide form during the course of the precipitation step. Accordingly, longer processing times or processes comprising multiple cycles may result in a higher concentration of oxyhydroxide and oxide precipitates.

The nickel oxy precipitate may also comprise further precipitates, for instance transition metal precipitates or precipitates of the impurities, depending on the composition of the second supernatant.

To form the nickel oxy precipitate, a basifying agent is used. Any suitable basifying agent may be used.

In an embodiment, the nickel precipitation step comprises adding a basifying agent to the second supernatant.

Preferably, the basifying agent is an alkali metal or alkaline earth metal.

Examples of suitable alkali metal or alkaline earth metal hydroxide or oxide comprise LiOH, NaOH, Ca(OH)₂, or MgO. Preferably, the nickel precipitation step comprises adding an alkali metal hydroxide, wherein the alkali metal hydroxide is NaOH.

By using NaOH as the basifying agent, the complexity of the system is kept to a minimum. Typically, the aqueous solution will already comprise sodium, particularly when the nickel and cobalt source is a secondary source. If high purity nickel precipitate is desired, steps to remove sodium may form part of the process. By using NaOH as the basifying agent, no additional purification steps are required, as the sodium from the system will need to be removed regardless.

The alkali metal or alkaline earth metal hydroxide or oxide may be in the form of a solid or a liquid. For example, the nickel precipitation step may be carried out by diluting the second supernatant and then adding solid alkali or alkaline earth hydroxide or oxide (e.g. NaOH), or conversely the nickel precipitation may be carried out by simultaneously adding aqueous alkali or alkaline earth metal hydroxide or oxide (e.g. aqueous NaOH) to the stream.

In an embodiment, the nickel precipitation step is carried out at a pH of 7 or above, such as 8 or above or 8.5 or above.

In some embodiments, the method of the disclosure further comprises the step of using the Ni oxy precipitates formed in the nickel precipitation step as a neutralizing agent in the cobalt precipitation step.

Not only does this improve the circularity of the method and minimize the environmental impact, the complexity of the system is also kept to a minimum. This leads to the possibility of recovering high purity cobalt and/or nickel from the aqueous solution when the recycled material is used as the neutralizing agent.

In an embodiment, the nickel oxy precipitate is Ni(OH)₂.

In an embodiment, the Ni(OH)₂ precipitate is used as a neutralizing agent in a cobalt precipitation step.

### Examples

### Example 1.1 - cobalt precipitation step with sodium persulphate oxidising reagent

The cobalt precipitation step of the disclosure was performed on an aqueous solution comprising cobalt and nickel sulphate in solution. The composition of the aqueous solution is shown in Table 1 below.

**Table 1.**

| **Element** | **wt. %** |
|---|---|
| **Ni** | 5.5 |
| **Co** | 1.1 |
| **Na** | 0.0 |
| **Ni:Co** | 5.0 |

The cobalt precipitation step was then carried out by:
- Adding sodium persulphate (NazSzOs) to the aqueous solution in a molar ratio of around 0.46:1 with respect to the amount of cobalt.
- The aqueous slurry was stirred at 400 rpm for the duration of the cobalt precipitation step.
- The pH was maintained at 3 by adding a neutralizing agent.
- The temperature of the aqueous solution was maintained at 85°C.

The dark data points in Figure 4A show how the oxidation-reduction potential of the system varied over the course of the cobalt precipitation step (dark data points). Figure 4A also shows how the pH of the aqueous solution varied during the cobalt precipitation step (light data points).

As can be seen from the figure, the ORP is above 700mV vs SHE, and the pH was maintained at around 3 for the duration of the reaction, meaning that the conditions were appropriate for selectively precipitating cobalt oxide as determined from the phase diagram of Figure 2.

The pH of the aqueous solution held at 3 but adding an Ni(OH)₂ slurry as a neutralizing agent over the course of the cobalt precipitation step.

Figure 4B shows how the composition of the aqueous solution varied over the course of the cobalt precipitation step.

As can be seen, at t=0, the aqueous solution comprised a high wt% of nickel and cobalt and no sodium.

Over the course of the cobalt precipitation step, the amount of cobalt in the aqueous solution decreases dramatically due to precipitation of cobalt oxide, whilst the amount of nickel in solution was maintained if not slightly increased. The increase in the amount of nickel in solution is due to evaporation of the water in the aqueous solution.

The amount of sodium in the aqueous solution gradually increases over the course of the cobalt precipitation step. This is due to addition of sodium in the form of sodium persulphate, and shows that sodium added to the system remains in the supernatant and is not precipitated.

The composition of the cobalt oxide precipitate and first supernatant after completion of the cobalt precipitation step are as shown in Table 2. The first supernatant comprised around 93wt% water after completion of the cobalt precipitation step.

**Table 2.**

| **Element** | **Solid** - **dry content (wt %)** | **First supernatant (wt%)** | **Metal recovery rate** |
|---|---|---|---|
| **Ni** | 7.73 | 6.13 | 2% |
| **Co** | 53.25 | 0.17 | **80%** |
| **Na** | 0.00 | 0.53 | 0% |
| **Eq. Ni(OH)2** | 12.21 | - | - |
| **Eq. CoOOH** | 83.07 | - | - |
| **Others** | 4.72 | - | - |
| **Total** | 100.00 | - | - |
| **[Ni]/[Co]** | 0.14 | 35.5 | - |
| **[Ni]/[Na]** | 2343 | 11.5 | - |

Table 2 shows that only a very small amount of cobalt remains in the first supernatant, and that the majority is captured and recovered in the cobalt oxide precipitate. The recovery rate for cobalt is around 80%.

Table 2 also shows that the amount of nickel in the solid composition from which the aqueous solution was prepared is roughly the same as the amount of nickel remaining in the first supernatant. This corresponds to around 2% of the nickel being precipitated in the cobalt precipitation step. This means that subsequent any nickel crystallisation step will be extremely low in cobalt wt%.

This demonstrate that the cobalt precipitation step is highly selective for cobalt over nickel, and is successful at separating nickel and cobalt.

This is also demonstrated by the dramatic change in the [Ni]/[Co] wt% from the solid composition to the first supernatant.

In addition, Table 2 shows that the cobalt precipitation step produces a high purity cobalt oxide precipitate as the filtrate comprises around 0.53wt% Na. This corresponds to a sodium recovery rate of 0wt% in the cobalt oxide precipitate meaning that the cobalt precipitation step is successful at separating cobalt from impurities found in the aqueous solution.

This is also reflected in the [Ni]/[Na] wt%.

### Example 1.2 - cobalt precipitation step with sodium persulphate oxidising reagent

The same experimental protocol as for Example 1.1 except that Na₂S₂O₈ was added to the aqueous solution in a molar ratio of around 0.77:1 with respect to the amount of cobalt. The results are shown in Table 3 below.

**Table 3.**

| **Element** | **Solid** - **dry content (wt %)** | **Filtrate (wt%)** | **Metal recovery rate** |
|---|---|---|---|
| **Ni** | 8.29 | 5.66 | 3% |
| **Co** | 42.01 | 0.01 | **99.2%** |
| **Na** | 0.00 | 0.75 | 0% |
| **Eq. Ni(OH)2** | 65.54 | - | - |
| **Eq. CoOOH** | 13.09 | - | - |
| **Others** | 21.37 | - | - |
| **Total** | 100.00 | - | - |
| **[Ni]/[Co]** | 0.20 | 633.69 | - |
| | | | |
| **[Ni]/[Na]** | - | 7.52 | - |

Table 3 shows that when a higher molar ratio of oxidising agent is used, a higher recovery rate of cobalt is obtained (99.2% cobalt recovery rate). This is in addition to a very low nickel recover rate (3% nickel recovery rate).

Again, this is also with the added benefit of a high purity cobalt oxide precipitate, as no sodium is precipitated despite the excess of oxidising reagent (vs cobalt).

This is also represented in Figures 5A and 5B which correspond to Figures 4A and 4B of example 1.1. Figure 5A shows that the system was very similar to that of example 1.1 and that conditions for oxidising cobalt oxide with sodium persulphate were achieved.

Figure 5B shows that a similar trend in the change in concentration of nickel, cobalt and sodium was achieved over the course of the experiment, however the cobalt recovery rate is higher due to the additional oxidising reagent in the system.

Example 2.1 is therefore evidence that the amount of oxidising agent can be used to tune the cobalt recovery rate, and to control the degree of separation of nickel and cobalt.

### Example 2.1 - cobalt precipitation step with ozone oxidising reagent (NC)

The cobalt precipitation step of the disclosure was also performed on an aqueous solution comprising cobalt and nickel sulphate in solution using ozone as the oxidising reagent. The composition of the aqueous solution is shown in Table 4 below.

**Table 4.**

| **Element** | **wt. %** |
|---|---|
| **Ni** | 4.1 |
| **Co** | 1.4 |
| **Na** | 0.0 |
| **Ni:Co** | 5.0 |

The cobalt precipitation step was then carried out by:
- Adding ozone (O₂/O₃) to the aqueous solution.
- The aqueous slurry was stirred at 400rpm for the duration of the cobalt precipitation step.
- The pH was from 3 to 5, maintained by adding a neutralizing agent.
- The temperature of the aqueous solution was maintained at 30°C.

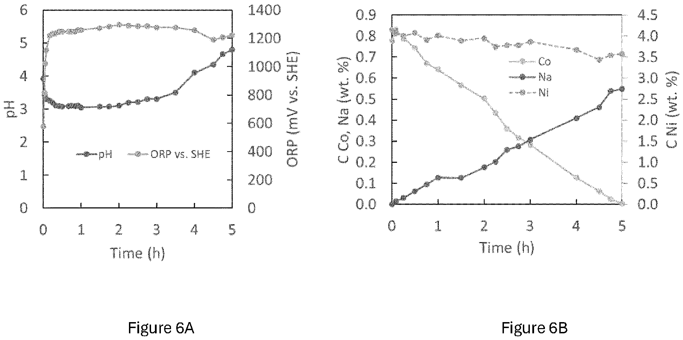

The light data points in Figure 6A show how the oxidation-reduction potential of cobalt oxide varied over the course of the cobalt precipitation step. Figure 6A also shows how the pH of the aqueous solution varied during the cobalt precipitation step (light data points).

As can be seen from the figure, the ORP is above 700mV vs SHE, and the pH was maintained between 3 and 5 for the duration of the reaction, meaning that the conditions were appropriate for selectively precipitating cobalt oxide using sodium persulphate.

The pH of the aqueous solution held at 3-5 by adding an Na(OH) as a neutralizing agent over the course of the cobalt precipitation step.

Figure 6B shows how the composition of the aqueous solution varied over the course of the cobalt precipitation step.

As can be seen, at t=0, the aqueous solution comprised nickel and cobalt but no sodium.

Over the course of the cobalt precipitation step, the amount of cobalt in the aqueous solution decreases dramatically due to precipitation of cobalt oxide, whilst the amount of nickel in solution was maintained.

The amount of sodium in the aqueous solution gradually increases over the course of the cobalt precipitation step. This is due to addition of sodium in the form of the neutralizing agent and shows that sodium added to the system remains in the supernatant and is not precipitated.

The composition of the cobalt oxide precipitate and first supernatant after completion of the cobalt precipitation step are as shown in Table 5.

**Table 5.**

| **Element** | **Solid** - **dry content (wt %)** | **First supernatant (wt%)** | **Metal recovery rate** |
|---|---|---|---|
| **Ni** | 6.57 | 3.6 | 2.6% |
| **Co** | 47.08 | 0.02 | **99.2%** |
| **Na** | 0.00 | 0.53 | 0% |
| **Eq. Ni(OH)2** | 10.27 | - | - |
| **Eq. CoOOH** | 73.44 | - | - |
| **Others** | 16.29 | - | - |
| **Total** | 100.00 | - | - |
| **[Ni]/[Co]** | 0.14 | 1652.9 | - |
| **[Ni]/[Na]** | 488.9 | 6.5 | - |

Table 5 shows that only a very small amount of cobalt remains in the first supernatant, and that the vast majority is captured and recovered in the cobalt oxide precipitate. The recovery rate for cobalt is around 99.2%.

Table 5 also shows that the amount of nickel in the solid composition from which the aqueous solution was prepared is roughly the same as the amount of nickel remaining in the first supernatant. This corresponds to around 2.6% of the nickel being precipitated in the cobalt precipitation step.

This demonstrates that the cobalt precipitation step is highly selective for cobalt over nickel and is successful at separating nickel and cobalt.

This is also demonstrated by the dramatic change in the [Ni]/[Co] wt% from the solid composition to the first supernatant.

In addition, Table 5 shows that the cobalt precipitation step produces a high purity cobalt oxide precipitate as the filtrate comprises around 0.53wt% Na. This corresponds to a sodium recovery rate of 0wt% in the cobalt oxide precipitate meaning that the cobalt precipitation step is also successful at separating cobalt from impurities found in the aqueous solution.

This is also reflected in the [Ni]/[Na] wt%.

### Example 2.2 - cobalt precipitation step with ozone oxidising reagent (NMC)

The cobalt precipitation step of the disclosure was also performed on an aqueous solution comprising cobalt, nickel and manganese sulphate in solution using ozone as the oxidising reagent. The composition of the aqueous solution is shown in Table 6 below.

**Table 6.**

| **Element** | **C (wt. %)** |
|---|---|
| **Ni** | 4.75 |
| **Co** | 0.51 |
| **Mn** | 0.03 |
| **Na** | 0.18 |

The cobalt precipitation step was then carried out by:
- Adding ozone (O₂/O₃) to the aqueous solution.
- The aqueous slurry was stirred at 400rpm for the duration of the cobalt precipitation step.
- The pH 4.5, maintained by adding a neutralizing agent.
- The temperature of the aqueous solution was maintained at 30°C.

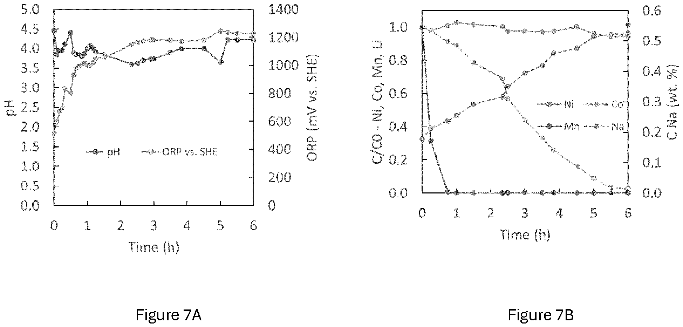

Figure 7A and 7B, corresponding to Figure 6A and 6B for example 2.1, show that the cobalt precipitation step of example 2.2 is successful at separating cobalt from nickel when the system further comprises manganese.

The light data points in Figure 7A shows how the oxidation-reduction potential of cobalt oxide varied over the course of the cobalt precipitation step. Figure 7A also shows how the pH of the aqueous solution varied during the cobalt precipitation step (dark data points).

As can be seen from the figure, the ORP is above 700mV vs SHE, and the pH was maintained around 4.5 for the duration of the reaction, meaning that the conditions were appropriate for selectively precipitating cobalt oxide using sodium persulphate.

The pH of the aqueous solution held at around 4.5 by adding an Na(OH) as a neutralizing agent over the course of the cobalt precipitation step.

Figure 7B shows how the composition of the aqueous solution varied over the course of the cobalt precipitation step. Figure 7B shows that both cobalt and manganese were selectively precipitated over the course of the cobalt precipitation step (drastic reduction in the concentration). In contrast, the nickel concentration was relatively stable over the course of the cobalt precipitation step meaning that the process is also successful at separating nickel and cobalt, even when the aqueous solution comprises manganese.

As with example 2.1, the amount of sodium gradually increased over the course of the cobalt precipitation step due to the addition of the neutralizing agent. The cobalt/manganese precipitated formed in this step is therefore relatively pure i.e. free from sodium or other impurities in the aqueous solution.

The listing or discussion of an apparently prior published document in this specification should not necessarily be taken as an acknowledgement that the document is part of the state of the art or is common general knowledge.

Unless otherwise indicated, all technical and scientific terms used herein have the same meaning as commonly understood by one of ordinary skill in the art to which this invention pertains.

Preferences, options and embodiments for a given aspect, feature or parameter of the invention should, unless the context indicates otherwise, be regarded as having been disclosed in combination with any and all preferences, options and embodiments for all other aspects, features and parameters of the invention.

## Claims

1. A method of recovering cobalt and nickel from an aqueous solution, the aqueous solution comprising cobalt and nickel sulphate in solution, the method comprising:
- A cobalt precipitation step comprising adding an oxidising reagent to the aqueous solution to form a cobalt oxide precipitate and a first supernatant, wherein the pH of the aqueous solution is maintained at a pH of from 2 to 5 during the cobalt precipitation step;
- Separating the cobalt oxide precipitate and the first supernatant;
- A nickel crystallisation step comprising recovering crystalline nickel sulphate from the first supernatant and forming a second supernatant; and
- Optionally a nickel precipitation step comprising adding a basifying agent to the second supernatant to form a nickel oxy precipitate.

2. The method of claim 1 comprising a manganese precipitation step, wherein the manganese precipitation step is carried out before the cobalt precipitation step, and wherein the manganese precipitation step comprises:
- Providing an aqueous starting solution comprising manganese, nickel and cobalt sulphate in solution
- A manganese precipitation step comprising selectively precipitating manganese over nickel and cobalt from the aqueous starting solution to form a manganese precipitate and an aqueous solution comprising cobalt and nickel sulphate in solution;
- Removing the manganese precipitate from the aqueous solution.

3. The method of claim 1 or 2 wherein the aqueous solution further comprising manganese sulphate in solution, wherein the molar ratio of Co:Mn ratio is at least 3:1, at least 4:1, for instance at least 6:1, at least 8:1, at least 9:1, at least 10:1 or at least 20:1, preferably wherein the molar ratio of Co:Mn is from 5:1 to 9:1.

4. The method of any preceding claim wherein the aqueous solution further comprising manganese sulphate in solution, wherein the molar ratio of Ni:Mn is at least 5:1, for instance at least 50:1, at least 100:1, at least 200:1, at least 500:1 or at least 1000:1.

5. The method of any preceding claim wherein the pH of the aqueous solution is maintained at a pH of from 2 to 4.8 during the cobalt precipitation step, for instance from 2 to 4.5, from 2 to 4.2, from 2 to 4, from 2.2 to 3.8, from 2.5 to 3.5 or from 2.8 to 3.2, preferably wherein the pH of the aqueous solution is maintained at a pH of about 3 during the cobalt precipitation step.

6. The method of any preceding claim wherein the cobalt precipitation step comprises adding a neutralizing agent to maintain the pH.

7. The method of any preceding claim wherein the Ni:Co molar ratio in the input stream of aqueous solution is lower than that Ni:Co molar ratio in the first supernatant.

8. The method of any preceding claim wherein the oxidising agent comprises a peroxide moiety, wherein optionally the oxidising agent is selected from a persulphate or persulphate salt, ozone, SO₂/O₂ and combinations thereof.

9. The method of claim 8 wherein the oxidising agent is selected from lithium persulphate, sodium persulphate, ammonium persulphate, potassium persulphate and combinations wherein, preferably wherein the oxidising reagent is sodium persulphate.

10. The method of claim 8-9 wherein the oxidising reagent is ozone.

11. The method of any preceding claim the cobalt precipitation step results in the recovery of at least 10wt% of the total amount of cobalt in the aqueous solution comprising cobalt and nickel sulphate used as the input stream for the cobalt precipitation step, such as at least 20wt%, at least 30wt%, at least 40wt%, at least 50wt% at least 60wt%, at least 70wt%, at least 80wt% or at least 90wt% of the total amount of cobalt in the aqueous solution comprising cobalt and nickel sulphate used as the input stream for the cobalt precipitation step.
11. The method of any preceding claim wherein the cobalt precipitation step results in the recovery of 10wt% or less, such as 8wt% or less, 6wt% or less, 4wt% or less 2wt% or less of the nickel in the aqueous solution comprising cobalt and nickel sulphate used as the input stream for the cobalt precipitation step.

12. The method of any preceding claim wherein the cobalt precipitation step is carried out at a temperature of above 50°C, such as above 60°C, or above 70°C, for instance the cobalt precipitation step may be carried out at a temperature of between 50-90°C, such as between 55-85°C, between 60-80°C or between 70-80°C.

13. The method of any preceding claim wherein the nickel precipitate formed in the nickel precipitation step is Ni(OH)₂.

14. The method of any preceding claim wherein the nickel precipitation step comprises adding a basifying agent to the second supernatant wherein the basifying agent is a metal hydroxide, preferably wherein the basifying agent is NaOH.

15. The method of claim 13-14 wherein the Ni(OH)₂ formed in the nickel precipitation step is used as the neutralizing agent of claim 6.
